Europäisches Patentamt

European Patent Office

Office européen des brevets

(11) Numéro de publication : **0 159 946**
**B1**

(12) **FASCICULE DE BREVET EUROPÉEN**

(45) Date de publication du fascicule du brevet :
06.07.88

(21) Numéro de dépôt : 85400731.7

(22) Date de dépôt : 12.04.85

(51) Int. Cl.⁴ : **F 16 F   1/36**

(54) **Dispositif de suspension élastique à forte rigidité angulaire.**

(30) Priorité : 19.04.84 FR 8406197

(43) Date de publication de la demande :
30.10.85 Bulletin 85/44

(45) Mention de la délivrance du brevet :
06.07.88 Bulletin 88/27

(84) Etats contractants désignés :
DE FR GB IT NL SE

(56) Documents cités :
EP-A- 0 089 858
DE-B- 1 940 761
FR-A- 2 068 009
FR-A- 2 516 455
GB-A-   595 981
GB-A- 1 172 886
US-A- 2 920 428

(73) Titulaire : BERTIN & CIE
Zone Industrielle Boîte postale 3
F-78373 Plaisir Cedex (FR)

(72) Inventeur : de Goncourt, Louis
6, Rue Nungesser Voisin-le-Bretonneux
F-78190 Trappes (FR)

(74) Mandataire : de Boisse, Louis et al
CABINET DE BOISSE 37, Avenue Franklin D. Roosevelt
F-75008 Paris (FR)

EP 0 159 946 B1

Jouve, 18, rue St-Denis, 75001 Paris, France

## Description

L'invention concerne un dispositif de suspension élastique à forte rigidité angulaire, disposé entre une charge et un porteur.

On connaît des dispositifs de suspension élastique de charge que l'on interpose entre cette dernière et un porteur.

Par porteur, on entendra aussi bien le sol, qu'un élément d'emballage ou le plateau d'un moyen de transport.

Ces dispositifs sont prévus aussi bien pour empêcher la transmission des vibrations ou des chocs de la charge au porteur que l'inverse.

Les dispositifs généralement employés sont essentiellement constitués d'organes élastiques tels que des ressorts et/ou des blocs d'élastomère, fixés en nombre plus ou moins grand directement ou indirectement au porteur. La répartition des organes élastiques est dictée par la répartition des masses de la charge. Cette sensibilité au positionnement de la charge est remarquable par exemple dans le cas d'un support ou d'un bâti, isolé d'un plan porteur (sol ou autre) par un dispositif anti-vibratoire, sur lequel une charge est déposée dans une position quelconque. GB-A-595 981 montre un exemple de réalisation d'un tel dispositif antichoc présentant une lame élastique interposée entre le plan porteur constitué d'un bâti et le plan support sur lequel repose la masse. La lame élastique a une forme courbe. Le centre de la lame est fixé rigidement au bâti et ses extrémités sont fixées au plan support. L'amortissement est obtenu par l'élasticité des branches maintenues entre le plan porteur et le plan support.

A moins que les organes élastiques soient d'une très grande raideur, et en ce cas produisent une mauvaise filtration des vibrations, le support ne conserve pas une position horizontale mais s'incline du côté le plus lourd de la charge. Cet effet est particulièrement gênant quand le porteur est un véhicule et soumet la charge à des variations rapides de force horizontale. La charge a alors tendance à augmenter les efforts latéraux et à amplifier le roulis du véhicule. La correction des effets de roulis fait appel dans la technique actuelle des suspensions à des moyens mécaniques complémentaires relativement encombrants et coûteux.

FR-A-2 516 455 a tenté de remédier à ces inconvénients par l'utilisation d'une lame de suspension en matériau composite de forme particulière. La partie centrale de la lame de plus grande flexibilité est maintenue au châssis en deux points équidistants de l'axe du véhicule et les extrémités supportent les roues. Les pivots de fusée de roue sont fixés à la jambe d'amortisseur afin que la voie du train soit maintenue sensiblement constante. Cette suspension a comme but principal d'alléger la suspension et de présenter un bon effet antidévers sans toutefois résoudre parfaitement le problème du maintien de l'horizontalité lors d'une charge dissymétrique.

L'invention se propose de réaliser une suspension élastique présentant une faible raideur en déplacement vertical symétrique pour filtrer toutes les fréquences et vibrations de la charge ou du porteur et une forte raideur en roulis pour éviter l'inclinaison de la charge quelle que soit la répartition des masses ou la transmission des efforts latéraux appliqués à la charge ou produit par la charge.

Les explications et figures données ci-après, à titre d'exemple, permettront de comprendre comment l'invention peut être réalisée.

La figure 1 est une première forme de réalisation d'un dispositif selon l'invention.

La figure 2 est une deuxième forme de réalisation.

La figure 3 est une réalisation dans laquelle l'élément de suspension présente une forme évolutive.

La figure 4 est un dispositif comportant deux éléments de suspension en croix.

Les figures 5 à 7 montrent l'aspect que peut prendre un élément sous l'action de différentes charges pour obtenir un effet de raideur progressive.

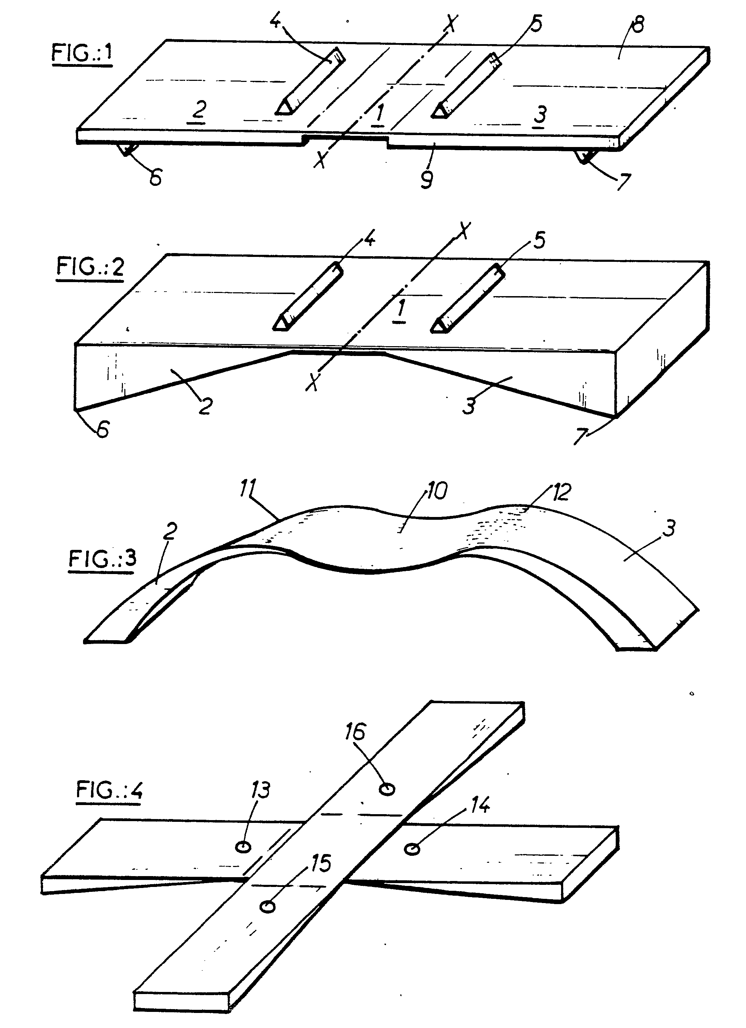

Le dispositif, selon l'invention, montré figure 1 comporte un élément de suspension formé d'une lame centrale élastique 1 comprise entre deux parties d'extrémité rigides 2, 3 et quatre appuis 4-7 disposés symétriquement deux à deux 4, 5 ; 6, 7 par rapport à l'axe de symétrie transversal de la lame sur chacune des faces 8, 9 de l'élément de suspension. Par le terme « appui », on comprend d'une façon générale tout dispositif de liaison pouvant travailler en traction ou compression.

Selon une deuxième forme de réalisation de l'élément présenté figure 2, les extrémités rigides 2 et 3 ont une section longitudinale en forme de triangle, deux des appuis symétriques 6, 7 étant formés par une des arêtes définies par un sommet du triangle.

Selon une réalisation non représentée, dérivée de la précédente, les extrémités rigides 2, 3 de section en forme de triangle constituent les appuis. En effet les deux sommets opposés à celui maintenant la lame définissent les appuis symétriques 6, 7 et 4, 5.

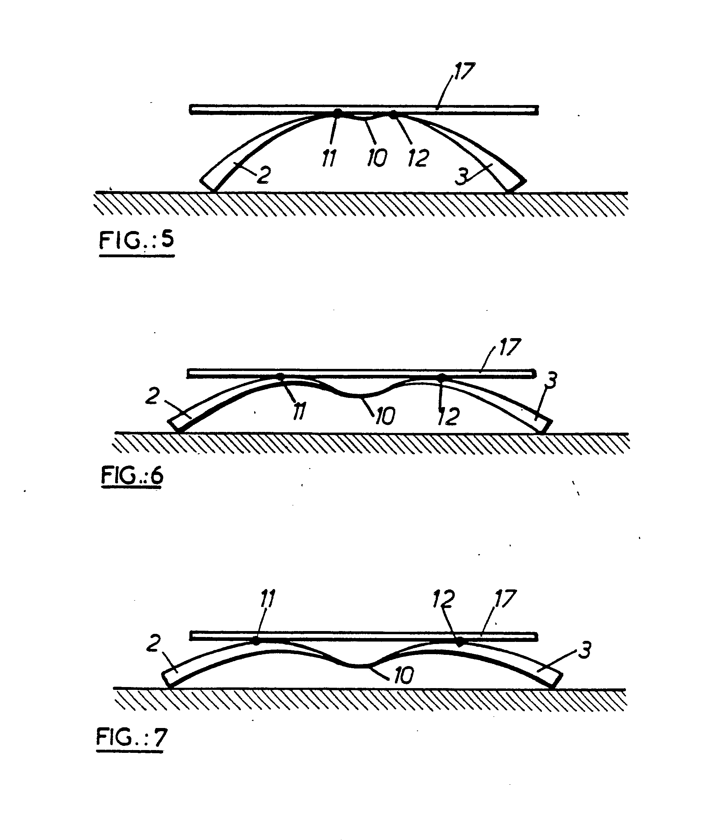

Selon une troisième forme de réalisation, représentée figure 3, l'élément a une forme évolutive, la lame centrale constituant une partie élastique 10 raccordée par ses extrémités aux extrémités d'épaisseur croissante 11, 12 des parties d'extrémité rigides 2, 3. Les parties sommitales des parties convexes 11, 12 constituent deux appuis symétriques par rapport à l'axe de symétrie transversal de la lame.

Selon une forme préférée de réalisation, la lame élastique est constituée de fibres s'étendant au moins longitudinalement d'une extrémité à l'autre, noyées dans un liant approprié. La figure 3 montre une réalisation dans laquelle la partie centrale formant la lame élastique est constituée d'une nappe de fibres (verre, carbone, etc...) noyées dans une résine synthétique (époxy par exemple). Cette nappe de fibres forme la peau des parties d'extrémité 2, 3 qui présentent une section transversale croissante vers les extrémités libres. Les partaies d'extrémité 2, 3 sont formées, par exemple, d'un matériau plastique.

Cette nappe est constituée d'une ou de plusieurs couches de fibres parallèles, les couches étant séparées à leurs extrémités pour former les deux peaux des parties d'extrémités. Les extrémités de la ou des couches peuvent également être incluses dans le matériau formant les parties d'extrémité.

La nappe de fibres peut être formée par un tissu présentant une anisotropie de ses caractéristiques élastiques entre les sens perpendiculaire, travers et longitudinal, le sens de la caractéristique élastique la meilleure étant choisi comme sens longitudinal de la lame élastique formée à partir de ce tissu.

Le mode de fonctionnement du dispositif va être ci-après décrit en regard de la figure 2.

On admettra que le dispositif repose par les appuis inférieurs 6 et 7 sur une surface porteuse. Les appuis supérieurs 4 et 5 supporteront la charge ou un plateau sur lequel la charge sera placée. Quelle que soit la position de la charge par rapport à l'axe de symétrie transversale XX', celle-ci produira un déplacement vertical symétrique.

Le déplacement vertical se produira encore lorsque la charge subira une accélération ou une décélération. le roulis, c'est-à-dire les mouvements de balancement autour de l'axe longitudinal du dispositif, ne sera pas transmis. L'insensibilité aux mouvements de roulis est due à la rigidité transversale de l'élément et en particulier de la lame élastique 1, les appuis continus 6 et 7 étant d'une largeur suffisante pour reposer de façon stable sur la surface porteuse.

Les appuis peuvent être discontinus et formés de plots approximativement ponctuels disposés près des bords latéraux de l'élément.

Il est compréhensible que la charge ou le plateau supportant la charge doit être proportionné à la dimension du dispositif et en particulier que la position du centre de gravité de la charge peut déterminer la conception des appuis 4 et 5, ceux-ci étant à l'intérieur du polygone déterminé par les appuis 6, 7.

Pour des charges de grandes dimensions, il est possible d'associer plusieurs éléments parallèlement les uns aux autres et de les verrouiller dans le sens transversal. En l'absence de verrouillage, on obtiendrait un dispositif de suspension présentant une raideur affaiblie transversalement par rapport à un dispositif monobloc.

Selon une forme de réalisation susceptible d'être utilisée pour des charges n'autorisant aucune souplesse dans le sens transversal aussi bien que longitudinal, on réalise un dispositif comportant deux éléments disposés en croix, comme montré figure 4. Les appuis supérieurs sont formés dans ce cas par des plots 13, 14, 15, 16.

Le dispositif de suspension conforme à l'invention est applicable à la réalisation :

— de planchers suspendus pour camions ou remorque un plancher reposant sur un dispositif de suspension à un ou plusieurs éléments s'appuyant sur le plancher fixe du véhicule ;

— de palettes de transport de charges fragiles autorisant à la fois un niveau d'accélération faible en filtrant les accélérations du transporteur et une possibilité de décentrement de la charge sans déversement ;

— de supports divers pour matériel électronique, pour civière, traîneau, etc...

— de suspensions antivibratoires (pour platines de tourne-disques, par exemple) ;

— de dispositifs anti-chocs pour le transport de matériel fragile ;

— de supports de matériel embarqué ;

— d'amortisseurs pour armes légères ;

— de piètements de fauteuils ou chaises basculants.

Les exemples d'utilisation ci-dessus ne sont que des exemples non limitatifs.

Le dispositif, selon l'exemple de la figure 3, permet d'obtenir une suspension à flexibilité variable et fréquence constante suivant la charge à laquelle il est soumis. Les figures 5 à 7 montrent le fonctionnement d'un tel dispositif.

Les appuis supérieurs sont constitués par les lignes de contact d'un plateau 17 support de charge reposant sur les extrémités convexes 11, 12 des parties d'extrémité rigides 2, 3. Suivant la charge, la courbure de la lame 10 est plus ou moins accentuée. C'est ainsi que la figure 5 montre l'aspect de l'élément de suspension à vide ; la figure 6 l'élément sous faible charge et la figure 7, l'élément sous forte charge. Il est évident que la flexibilité de la lame est calculée pour supporter une charge comprise entre une valeur minimale et une valeur maximale.

Les extrémités convexes 11, 12 jouent le rôle de cames le long desquelles se déplacent les lignes de contact du plateau 17 supportant la charge selon les accélérations à laquelle la charge est soumise.

La réalisation d'éléments de suspension pour une charge donnée nécessite le calcul de la lame élastique selon les formules de calcul des lames ressorts connues de l'homme de l'art.

**Revendications**

1. Dispositif de suspension élastique à forte rigidité angulaire, comportant au moins une lame élastique (1) disposée entre un porteur et une charge, caractérisé en ce que ladite lame comporte deux parties rigides (2, 3) d'extrémité sur lesquelles sont formés quatre appuis (4 à 7) symétriques deux à deux par rapport à l'axe de symétrie transversal de la lame et sur chacune des faces (8, 9) desdites parties, lesdits appuis symétriques deux (4, 5) à deux (6, 7) déterminant un plan porteur et un plan de charge parallèle dans lesquels lesdits appuis sont susceptibles de se déplacer.

2. Dispositif selon la revendication 1, caractérisé en ce que les deux parties d'extrémité rigides ont une section longitudinale en forme de triangle, au moins deux des appuis symétriques (6, 7) étant formés par une arête définie par le sommet du triangle.

3. Dispositif selon la revendication 1, caractérisé en ce que l'élément de suspension a une forme évolutive, la lame élastique (10) formant la partie centrale raccordée par ses extrémités aux extrémités convexes (11, 12) des parties d'extrémités rigides (2, 3), les parties sommitales des extrémités convexes constituant deux appuis symétriques par rapport à l'axe de symétrie transversal de la lame.

4. Dispositif selon l'une des revendications précédentes, caractérisé en ce que la lame élastique est formée par un matériau composite comportant au moins une nappe de fibres parallèles noyée dans une résine synthétique.

5. Dispositif selon l'une des revendications 1 à 3, caractérisé en ce que la lame élastique est formée par un matériau composite comportant au moins une nappe de tissu présentant une caractéristique élastique dans un sens, supérieure à celle dans un sens perpendiculaire, le sens de la caractéristique élastique supérieure étant choisi comme sens longitudinal de la lame formée à partir du tissu.

6. Dispositif selon la revendication 4 ou 5, caractérisé en ce que la ou les nappes forment la peau des parties d'extrémité (2, 3).

7. Dispositif selon l'une des revendications précédentes, caractérié en ce qu'il est constitué de deux éléments de suspension disposés en croix, chacun des éléments portant sur les même faces au moins deux appuis ponctuels symétriques par rapport à l'axe de symétrie transversal de chaque lame, lesdits appuis déterminant un plan porteur et/ou un plan de charge dans lesquels ils sont susceptibles de se déplacer.

8. Dispositif selon l'une des revendications 1 à 7, caractérisé en ce qu'il est constitué d'au moins deux éléments de suspension disposés parallèlement, éventuellement verrouillés transversalement.

## Claims

1. An elastic suspension device having a great angular rigidity comprising at least an elastically yieldable leaf (1) disposed between a load and a support, characterised in that the said leaf has two rigid end portions (2, 3) on which four bearing means are disposed symmmetrically in pairs relative to the transverse axis of symmetry of the leaf and on each side (8, 9) of the said portions, the said bearing means symmetrically in pairs (4, 5 ; 6, 7) defining a support plane and a parallel load plane wherein the said bearing means are able to move.

2. A device according to claim 1, wherein said two rigid end portions have a triangular longitudinal section, at least two of said symmetrical bearing means being formed by an edge defined by an apex of said triangular section.

3. A device according to claim 1, wherein said suspension element has an evolutive shape and said elastically yieldable leaf forms a central portion of said suspension element of evolutive shape and is connected by ends thereof to convex end portions of said rigid end portions, said convex portions having top portions which constitute two of said bearing means which are symmetrical relative to said transverse axis of symmetry of said leaf.

4. A device according to claim 1, wherein said elastically yieldable leaf is formed by at least one sheet of parallel fibers embedded on a synthetic resin.

5. A device according to claim 4, wherein said sheet of fibers is formed by a compound material comprised of at least a sheet of a fabric having a first elastic property in a first direction and a second elastic property in a second direction, said first elastic property being superior to said second elastic property and said first direction being the longitudinal direction of said leaf formed from a fabric.

6. A device according to claim 4 or 5, wherein at least one sheet of fibers constitutes a skin of said end portions (2, 3).

7. A device according to anyone of the preceeding claims, comprising two of said suspension elements which are arranged in a cross configuration, each of said two suspension elements carrying on the same sides at least two spot bearing means which are symmetrical relative said transverse axis of symmetry of said leaf, the said bearing means defining a support plane and/or a load plane wherein the said bearing are able to move.

8. A device according to claim 1, comprising at least two of said suspension elements in parallel relation to each other, and possibly transversely locked together.

## Patentansprüche

1. Vorrichtung zur elastischen Abstützung mit hoher Winkelsteifigkeit, mit wenigstens einem zwischen einem Träger und einer Last angeordneten elastischem Blatt (1), dadurch gekennzeichnet, daß das Blatt zwei starre Endabschnitte (2, 3) aufweist, auf denen vier Auflager (4 bis 7) ausgebildet sind, die paarweise zur Quer-Symmetrieachse des Blattes symmetrisch und jeweils auf einer Seite (8, 9) der Endabschnitte so angeordnet sind, daß die Auflager-Paare (4, 5 bzw. 6, 7) eine Träger-Ebene und eine parallele Last Ebene bilden, in denen die Auflager beweglich sind.

2. Vorrichtung nach Anspruch 1, dadurch gekennzeichnet, daß die beiden starren Endabschnitte ein im Längsschnitt dreieckige Form haben, wobei wenigstens zwei der symmetrischen Auflager (6, 7) von einer Kante gebildet sind, die durch die Dreiecks-Spitze definiert ist.

3. Vorrichtung nach Anspruch 1, dadurch gekennzeichnet, daß das Federungselement sich erweiternd gestaltet ist, indem das den Mittelteil bildende elastische Blatt (10) mit seinen Enden an die konvexen Enden (11, 12) der starren Endabschnitte (2, 3) anschließt, so daß die Scheitelabschnitte der konvexen Enden in Bezug auf die Quer-Symmetrieachse des Blattes zwei symmetrische Auflager bilden.

4. Vorrichtung nach einem der vorhergehenden Ansprüche, dadurch gekennzeichnet, daß das elastische Blatt aus einem Verbundmaterial gebildet ist, das wenigstens eine in Kunstharz eingebettete Flachbahn aus parallelen Fasern aufweist.

5. Vorrichtung nach einem der Ansprüche 1 bis 3, dadurch gekennzeichnet, daß das elastische Blatt aus einem Verbundmaterial gebildet ist, das wenigstens eine Materialbahn aufweist, die in einer Richtung eine größere Elastizität als senkrecht dazu aufweist, wobei die Richtung der größeren Elastizität als Längsrichtung der durch die Materialbahn gebildeten Blattes gewählt ist.

6. Vorrichtung nach Anspruch 4 oder 5, dadurch gekennzeichnet, daß die bzw. jede Flachbahn die Außenhaut der Endabschnitte (2, 3) bildet.

7. Vorrichtung nach einem der vorhergehenden Ansprüche, dadurch gekennzeichnet, daß sie aus zwei kreuzweise zueinander angeordneten Elementen besteht, von denen jedes auf der gleichen Seite zumindest zwei punktförmige Auflager trägt, die symmetrisch zur Quer-Symmetrieachse jedes Blattes angeordnet sind und eine Träger-Ebene und/oder eine Last-Ebene bilden, in denen sie beweglich sind.

8. Vorrichtung nach einem der Ansprüche 1 bis 7, dadurch gekennzeichnet, daß sie aus wenigstens zwei parallel zueinander angeordneten Federungselementen besteht, die gegebenenfalls quer verriegelt sind.

FIG.:1

FIG.:2

FIG.:3

FIG.:4

FIG.:5

FIG.:6

FIG.:7